# EUROPEAN PATENT SPECIFICATION

(11) **EP 0 345 957 B1**
(45) Date of publication and mention of the grant of the patent: **23.03.1994**
(21) Application number: 89305099.7
(22) Date of filing: 19.05.1989
(51) Int. Cl.: H01S 3/06, H01S 3/17

(54) **Optical fibre amplifier**
Optischer Faserverstärker
Amplificateur à fibre optique

(30) Priority: 10.06.1988 GB 8813769
(43) Date of publication of application: 13.12.1989
(73) Proprietor: PIRELLI GENERAL plc, London WC2A 1JH (GB)
(72) Inventor: Laming, Richard Ian, Hamble, Hampshire (GB); Poole, Simon Blanchette, New South Wales 2204 (AU)
(74) Representative: Abbie, Andrew Kenneth

(56) References cited:
- ELECTRONICS LETTERS, vol. 21, no. 17, 15th August 1985, pages 737-738; S.B. POOLE et al.: "Fabrication of low-loss optical fibres containing rare-earth ions"
- OFC/IOOC, OPTICAL FIBER COMMUNICATION CONFERENCE AND INTERNATIONAL INTEGRATED OPTICAL FIBER CONFERENCE, Reno, Nevada, 19th - 22nd January 19 87, Technical Digest, paper W14; C.A. MILLAR et al.: "Concentration and co-doping dependence of the 4F3/2 to 4I11/12 lasing behavior of Nd3+ silica fibers"
- OPTICAL FIBER SENSORS 1988 TECHNICAL DIGEST SERIES, vol. 2, part 2, New Orleans, Louisiana, 27th - 29th January 1988, paper FDD1-1, Optical Society of America, Washington, D.C., US; E. SNITZER: "Rare earth fibers"
- APPLIED PHYSICS LETTERS, vol. 51, no. 22, 30th November 1987, pages 1768-1770, American Institute of Physics, New York, NY, US; M. NAKAZAWA et al.: "Simultaneous oscillation at 0.91, 1.08, and 1.53, mum in a fusion-spliced fiber laser"

## Description

This invention relates to optical fibre amplifiers, and more particularly to a pumped optical fibre amplifier having an optical fibre comprising an erbium doped core.

Such an amplifier is known, for example, from the first paragraph of an Article in Applied Physics Letters, vol. 51, no. 22, 30th November 1987. This article is primarily concerned with fibre lasers rather than amplifiers and discloses a fibre laser comprising a neodymium doped fibre fusion spliced with an erbium doped fibre an pumped to an Ar⁺ion laser at 514nm, mirrors being used at the free ends of the fibres for reflecting multiple wavelength oscillation at 910, 1080 and 1530 nm.

An object of the invention is to provide an efficient optical fibre amplifier for amplifying signals at wavelengths of approximately 1532 nm.

Erbium doped fibres are suitable for such amplifiers when pumped with an Ar⁺ion laser at 514.5 nm.

To operate as an amplifier, the fibre is pumped with an Ar⁺ion laser operating at 514.5 nm, so as to invert the erbium ions to a metastable energy level. Provided that the pump power is sufficient to invert greater than 50% of the erbium ions a signal beam of wavelength approximately 1532 nm propagated through the same fibre will achieve gain. Ideally all the pump power should be converted into useful signal gain, however excited state absorption (ESA) of the pump light depletes the pump power by absorption of pump photons by ions resident in the metastable level and provides an extra loss mechanism which does not contribute to signal gain, thus significantly reducing the amplifier pumping efficiency. A measure of the amplifier pumping efficiency is the ratio of the excited-state absorption cross-section to ground-state absorption (GSA) cross-section, 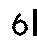 ESA/ 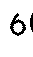 GSA. The smaller this ratio, the more efficient the fibre at a particular pump wavelength.

Silica cores of optical fibres are commonly doped with germania (GeO₂) to modify the refractive index of the core material. Fibres with such cores when codoped with erbium exhibit an unacceptably high ratio of ESA to GSA when pumped at wavelengths around 500 nm. We have found that using alumina (Al₂O₃) as the refractive index modifying dopant in a silica core doped with erbium provides a considerably lower ratio of ESA to GSA for the fibre at pump wavelengths around 500 nm.

The use of alumina as the refractive index modifying dopant has the additional advantage that the fabrication of the fibre may be facilitated by solution doping the core with a solution of an aluminium salt and an erbium salt, thus introducing both dopants in the same step.

The invention provides a pumped optical fibre amplifier having an optical fibre comprising an erbium doped silica core characterised in that the core has been solution doped using a solution of an aluminium salt and an erbium salt, and in that the optical fibre is arranged to be pumped by an Ar⁺ion laser.

In order that the invention may be well understood, an embodiment thereof, which is given by way of example only, will now be described with reference to the accompanying drawings, in which:
Figure 1 diagrammatically illustrates an Ar⁺ion pumped optical fibre amplifier;
Figure 2 illustrates the refractive index profile of an alumina doped fibre;
Figure 3 illustrates the loss spectra of alumina and germania doped fibres co-doped with erbium; and
Figure 4 illustrates the fluorescence spectra of alumina and germania doped fibres co-doped with erbium.

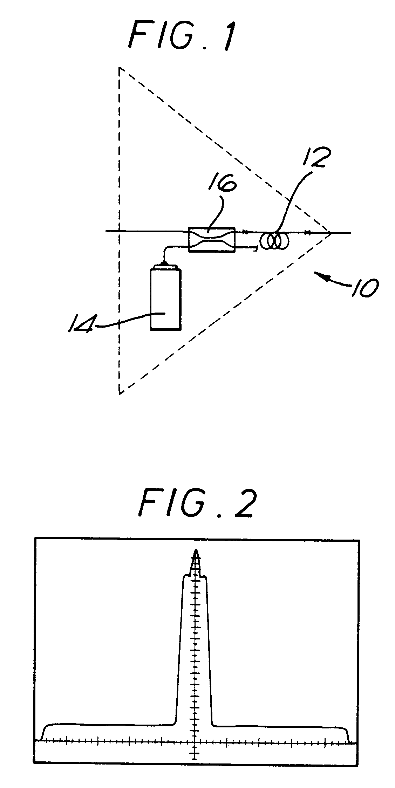

Referring first to Figure 1, there is shown an optical fibre amplifier 10 (which may be used as a power amplifier, an in-line amplifier or a pre-amplifier) for amplifying signals of approximately 1532nm. The amplifier 10 comprises an alumina-erbium co-doped fibre 12 arranged to be pumped at 514.5 nm by an Ar⁺ion laser 14 via a dichroic fibre coupler 16.

The fibre 12 is formed using a solution doping technique as an extension of the well-known MCVD technique. One or more conventional cladding layers (typically a SiO₂/P₂O₅/F glass) are first deposited on the inside surface of the substrate tube in a lathe, following which silica core layers are deposited at a reduced temperature to form a partially-sintered, porous soot. The alumina and erbium dopants are then introduced by removing the thus formed tube from the lathe and soaking the core layers in an aqueous or alcoholic solution of an aluminum salt and an erbium salt to ensure saturation of the porous soot. The tube is then replaced in the lathe, the core layers are dried and fused and the tube collapsed. Fibre drawing from the thus formed preform is conventional.

An aluminium salt is required which is obtainable in highly pure form and is easily soluble in water or alcohol. Aluminium trichloride hexahydrate is a suitable material, being readily available in 99.9995% pure form and being highly soluble. Erbium trichloride hexahydrate is the preferred erbium salt.

Figure 2 shows the refractive index profile of a typical preform made using the above technique. The profile is a good approximation to a step profile and indicates the consistency of the incorporation of the alumina across the core.

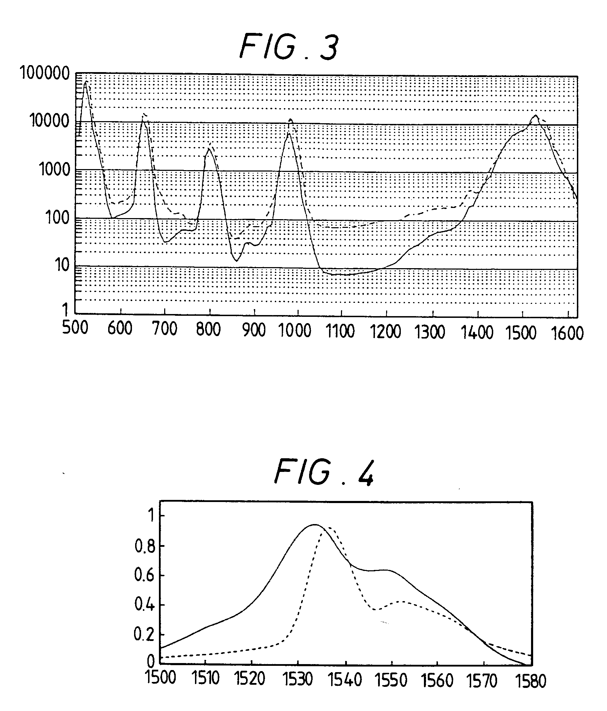

A typical loss spectrum of an Al₂O₃/SiO₂ core Er³⁺-doped fibre (125 µm O.D. cut-off = 1250nm) containing about 300 ppm Er³⁺ is shown by the solid line in the graph of Figure 3 in which graph loss in dB/km is plotted along the Y axis and wavelength in nm is plotted along the X axis. Superimposed on the same graph for comparison in dotted line is the loss spectrum of a GeO₂/SiO₂ core Er³⁺ doped fibre containing 200 ppm Er³⁺ which shows the shifts in the relative intensities of the erbium absorption spectra caused by the presence of the alumina. The associated fluorescence spectra are shown in Figure 4 in which power in arbitrary units is plotted along the Y axis and wavelength in nm is plotted along the X axis with the fluorescence spectra for the alumina doped core being shown in solid line and that for the germania doped core being shown in dotted line. It will be noted that there is very little shift in the peak fluorescence wavelength, compared to the large shift observed in, for instance, the 4-level ⁴F_{3/2} - ⁴I_{11/2} transition in Nd³⁺.

As mentioned hereinbefore, it is important for the ratio of excited-state absorption cross-section to ground-state absorption cross-section, ESA/ GSA to be small in the fibre of an optical fibre amplifier when pumped. This ratio was measured for the two fibre types at 514.5nm and found to be approximately 1 and approximately 0.5 for the Er³⁺/GeO₂/SiO₂ and Er³⁺/Al₂O₃/SiO₂ fibres respectively. Thus, the alumina co-doped fibre provides a significantly more efficient amplifier when pumped at 514.5 nm.

Signal gains of 23dB at 1.536 um have been obtained for an Er³⁺/Al₂O₃/SiO₂ fibre with a numerical aperture of 0.15, pumped with 300 mW of pump light at 514.5nm. In an Er³⁺/GeO₂/SiO₂ fibre, 300mW of pump power at 514.5nm was insufficient to obtain any notable signal gain.

It will be noted from the above that the core need only contain a few hundred ppm Er³⁺ in order to form an effective amplifier.

It is to be understood that other dopants may be introduced into the erbium alumina co-doped core.

## Claims

1. A pumped optical fibre amplifier (10) having an optical fibre (12) comprising an erbium doped silica core, characterised in that the core has been solution doped using a solution of an aluminium salt and an erbium salt, and in that the optical fibre (12) is arranged to be pumped by an Ar⁺ion laser (14).

2. An amplifier as claimed in claim 1, wherein the aluminum salt is aluminium trichloride hexahydrate.

3. An amplifier as claimed in claim 1, wherein the erbium salt is erbium trichloride hexahydrate.

4. An amplifier as claimed in claim 1, 2 or 3, wherein the core contains a few hundred ppm Er³⁺.

5. An amplifier as claimed in claim 4, wherein the core contains about 300 ppm Er³⁺.

## Patentansprüche

1. Optischer Faser-Pumpverstärker (10) mit einer optischen Faser (12), die einen mit Erbium dotierten Quarz-Kern enthält,
dadurch gekennzeichnet, daß der Kern mit einer Lösung unter Benutzung einer Lösung aus einem Aluminium-Salz und einem Erbium-Salz dotiert wurde, und dadurch, daß die optische Faser (12) so angeordnet ist, daß sie von einem Ar⁺-Ionenlaser (14) bepumpt wird.

2. Verstärker nach Anspruch 1,
dadurch gekennzeichnet, daß das Aluminium-Salz ein Aluminium-Trichlorid-Hexahydrat ist.

3. Verstärker nach Anspruch 1,
dadurch gekennzeichnet, daß das Erbium-Salz ein Erbium-Trichlorid-Hexahydrat ist.

4. Verstärker nach einem der Ansprüche 1 bis 3,
dadurch gekennzeichnet, daß der Kern einige hundert ppm Er³⁺ enthält.

5. Verstärker nach Anspruch 4,
dadurch gekennzeichnet, daß der Kern ungefähr 300 ppm Er³⁺ enthält.

## Revendications

1. Amplificateur à fibre optique pompée (10) comportant une fibre optique (12) comprenant un noyau de silice dopée avec de l'erbium, caractérisé en ce que le noyau a été dopé avec une solution moyennant l'utilisation d'une solution d'un sel d'aluminium et d'un sel d'erbium, et en ce que la fibre optique (12) est disposée de manière à être pompée par un laser à ions Ar⁺ (14).

2. Amplificateur selon la revendication 1, dans lequel le sel d'aluminium est de l'hexahydrate de trichlorure d'aluminium.

3. Amplificateur selon la revendication 1, dans lequel le sel d'erbium est de l'hexahydrate de trichlorure d'erbium.

4. Amplificateur selon la revendication 1, 2 ou 3, dans lequel le noyau contient quelques centaines de ppm de Er³⁺.

5. Amplificateur selon la revendication 4, dans lequel le noyau contient environ 300 ppm de Er³⁺.
